# EUROPÄISCHE PATENTSCHRIFT

(11) **EP 2 548 469 B1**
(45) Veröffentlichungstag und Bekanntmachung des Hinweises auf die Patenterteilung: **11.05.2016**
(21) Anmeldenummer: 12005276.6
(22) Anmeldetag: 18.07.2012
(51) Int. Cl.: A47B 13/00

(54) **Haltevorrichtung zum Halten einer Waage in einer Öffnung einer Tischplatte**
Device to hold scales in an opening in a work surface
Dispositif à fixer une balance dans une ouverture d'un plateau de table

(30) Priorität: 19.07.2011 DE 102011107925
(43) Veröffentlichungstag der Anmeldung: 23.01.2013
(73) Patentinhaber: Soehnle Industrial Solutions GmbH, 71522 Backnang (DE)
(72) Erfinder: Gerster, Stephan, 53343 Wachtberg-Pech (DE); Schurr, Michael, 71540 Murrhardt (DE); Stahl, Albrecht, 71560 Sulzbach (DE)
(74) Vertreter: Hoffmann, Jürgen

(56) Entgegenhaltungen:
- EP-A2- 1 336 356

## Beschreibung

Die Erfindung betrifft eine Haltevorrichtung zum Halten einer Waage in einer Öffnung einer Tischplatte.

Aus dem Stand der Technik Ist bereits eine Vielzahl von Waagen, insbesondere Tischwaagen, insbesondere zum Wiegen von Paketgewichten, bekannt. Hierzu werden die Waagen, insbesondere die Tischwaagen, auf einen Tisch gestellt.

Nachteilig an den bekannten Tischwaagen ist, dass diese zum Messen auf einen Tisch gestellt und nach einem Messen von dem Tisch weggeräumt werden müsse, was mit Arbeit für den Benutzer verbunden ist. Ein weiterer Nachteil der bekannten Tischwaagen besteht darin, dass diese nach dem Benutzen aufgrund ihrer Abmessungen einen großen Stauraum benötigen. Ferner besteht ein Nachteil von den bekannten Waagen darin, dass bei einem Anordnen von diesen auf dem Tisch kein ästhetisch ansprechender Eindruck entsteht.

Darüber hinaus haben die bekannten Waagen den Nachteil, dass die zu wiegenden Gegenstände umständlich auf die Wiegefläche gehoben und anschließend wieder heruntergehoben werden müssen.

Es ist beispielsweise aus DE 102 06 177 A1 auch bekannt, eine Küchenwaage in einer herausziehbaren Schublade eines Küchenmöbels unter zu bringen. Allerdings bringt eine solche Lösung den Nachteil mit sich, dass die ausgezogene Schublade störender Weise erheblich hervorragt. Ein solche Lösung ist außerdem allenfalls für kleine Küchenwaagen, jedoch nicht zum Wiegen von Paketgewichten geeignet.

Es ist daher die Aufgabe der vorliegenden Erfindung eine Haltevorrichtung zum Halten einer Waage vorzusehen, mittels der die oben genannten Nachteile vermieden werden.

Die Aufgabe wird durch eine Haltevorrichtung gelöst, die zumindest ein Festlegemittel zum - vorzugsweise wieder lösbaren - Festlegen der Haltevorrichtung an der Tischplatte aufweist.

Das Vorsehen der Haltevorrichtung bietet den Vorteil, dass diese eine Waage in einer Öffnung einer Tlschplatte halten kann. Somit muss der Benutzer die Waage nach dem Benutzen nicht wieder wegräumen oder vor dem Benutzen auf den Tisch stellen, wodurch sich für den Benutzer der Arbeitsaufwand reduziert. Ferner benötigt die Waage keinen zusätzlichen Stauraum, da diese nach dem Benutzen in der Öffnung des Tisches verstaut ist. Auch verbessert sich der ästhetische Eindruck, da die Waage während der Messung in der Öffnung angeordnet ist.

Bei einer ganz besonders vorteilhaften Ausführung ist die Haltevorrichtung derart ausgebildet, dass sie eine Waage so halten kann, dass die Wiegefläche bündig mit der Tischplattenfläche abschließt oder lediglich wenig, nämlich einige Millimeter oder wenige Zentimeter, nach oben über die Tischplattenfläche hochsteht. Auf diese Weise ist erreicht, dass der Benutzer das zu wiegende Gut nicht oder zumindest nicht sehr hoch anheben muss, sondern vielmehr auf die Wiegefläche schieben kann.

In einer bevorzugten Ausführung kann die Haltevorrichtung hängend an einer Tischplatte befestigt werden. Durch eine hängende Befestigung wird ein einfaches Anbringen der Waage an der Tischplatte sichergestellt. Ferner wird verhindert, dass die Haltevorrichtung den Boden kontaktiert, wodurch insbesondere die Reinigung des unterhalb der Tischplatte befindlichen Bodens vereinfacht wird.

Das Festlagemittel kann zumindest einen Haken zum Anhängen der Haltevorrichtung an die Tischplatte aufweisen. Alternativ oder zusätzlich kann das Festlegemittel zumindest einen Haken mit zumindest einem Schenkel aufweisen, der dazu bestimmt ist, in der Festlegeposition auf der Oberseite einer Tischplatte aufzuliegen. Durch das Vorsehen des zumindest einen Hakens und/oder des zumindest einen Hakens und des Schenkels wird ein einfach aufgebautes Festlegemittel geschaffen. Gleichzeitig ist das Festlegemittel derart ausgelegt, dass es das Gewicht der Waage und des zu wiegenden Gutes sicher halten kann.

In einer vorteilhaften Ausgestaltung der Erfindung kann die Haltevorrichtung eine Hubvorrichtung zum Anheben der gehaltenen Waage aufweisen. Insbesondere kann die Hubvorrichtung die gehaltene Waage relativ zu einer Tischplatte anheben. Das Anheben oder Absenken der Waage kann vorteilhaft durch ein Bedienelement der Hubvorrichtung gesteuert werden.

So kann die Hubvorrichtung - beilspielsweise durch ein Verschieben des Bedienelements parallel zu einer Aufnahmefläche und/oder parallel zu einer Tischplatte, an der die Haltevorrictung festgelegt ist, und/oder durch ein Verschieben senkrecht zur Hubrichtung - ein Anheben oder Absenken der Waage bewirken. Insbesondere kann das Bedienelement zum Anheben der gehaltenen Waage wie eine Schublade ausziehbar und zum Absenken der gehaltenen Waage wie eine Schublade einschiebbar ausgebildet sein.

Die Hubvorrichtung kann vorteilhaft eine Hubschiene mit zumindest einer Anlaufschräge besitzen. Die Hubschiene und damit die Anlaufschräge können zum Bewirken des Hubvorgangs relativ zu einer Aufnahme der Waage verschiebbar ausgebildet sein. Durch das Verschieben der Hubschiene und der Anlaufschräge in eine Richtung wird auf die gehaltene Waage eine Kraft ausgeübt, die ein Anheben der Waage bewirkt Bei einem Verschieben der Hubschiene und der Anlaufschräge in die entgegengesetzte Richtung wird auf die gehaltene Waage keine Kraft ausgeübt, so dass sich die Waage absenkt.

Die Hubvorrichtung kann vorteilhaft zwei - vorzugsweise parallel zueinander verlaufende - Hubschienen mit Anlaufschrägen aufweisen, die mit dem Bedienelement gekoppelt und in einer Schiene der Haltevorrichtung verschiebbar ausgebildet sein können. Bei dieser Ausführung ist sichergestellt, dass die Waage und/oder die Aufnahme geradlinig geführt ist.

Alternativ kann die Hubvorrichtung als eine Scherenhubvorrichtung oder eine Spindelhubvorrichtung ausgebildet sein. Die Hubvorrichtung kann natürlich auch anders ausgebildet sein, solange sichergestellt ist, dass mittels der Vorrichtung ein Anheben/Absenken der Waage ermöglich wird.

Bei einer vorteilhaften Ausführung weist die Hubvorrichtung zumindest einen Exzenter auf. Der Exzenter kann beispielsweise derart angeordnet sein, dass die äußere Exzenterfläche sich an einer Anschlagfläche abstützt, so dass durch Drehen des Exzenters der Abstand zwischen der Drehachse des Exzenters und der Anschlagfläche, durch den die Hubhöhe bestimmt ist,- je nach Drehrichtung - vergrößerbar oder verkleinerbar ist.

Alternativ oder zusätzlich kann die Hubvorrichtung auch zumindest einen Hubzylinder mit einem Hubkolben aufweist. Insbesondere kann vorgesehen sein, dass die Hubvorrichtung einen pneumatischen einen hydraulischen Antrieb aufweist.

Die Hubvorrichtung kann - insbesondere, wenn die Verwendung leichter Waagen vorgesehen ist, manuell antreibbar ausgebildet sein. Insbesondere wenn mit der Haltevorrichtung schwere Waagen gehalten werden sollen, kann vorteilhaft ein motorischer Antrieb vorgesehen sein.

Insbesondere kann die Hubvorrichtung vorteilhaft einen elektrischen Antrieb aufweisen. Es kann alternativ oder zusätzlich auch vorgesehen sein, dass die Hubvorrichtung zumindest einen Hubmagneten aufweist. Insbesondere kann vorgesehen sein, dass die Hubvorrichtung zum Überführen der Haltevorrichtung in die Hebeposition ein Elektromagnet aktiviert wird, der eine Aufnahme für eine Waage gegen die Gewichtskraft nach oben zieht

In einer vorteilhaften Ausgestaltung der Erfindung kann die Haltevorrichtung derart ausgebildet sein, dass die Haltevorrichtung in unterschiedlich große Tischplaftenöffnung eingesetzt werden kann. Alternativ oder zusätzlich kann die Haltevorrichtung derart ausgebildet sein, dass sie unterschiedlich große, insbesondere unterschiedlich hohe, Waagen halten kann. Der Einsatz in unterschiedlich großen Tischplattenöffnungen und/oder das Halten von unterschiedlich großen Waagen kann durch eine verstellbare Ausbildung der Haltevorrichtung ermöglicht werden. So kann die Haltevorrichtung, insbesondere die Haken und/oder Schenkel der Haltevorrichtung, teleskopförmig und/oder verschiebbar ausgebildet sein. Natürlich sind auch andere Ausbildungen der Haltevorrichtung möglich, bei denen sichergestellt ist, dass die Haltevorrichtung in unterschiedlich große Tischplattenöffnungen eingesetzt werden kann und/oder unterschiedlich große Waagen halten kann.

Gemäß einem Aspekt der Erfindung kann die oben genannte Haltevorrichtung in einer Wiegevorrichtung eingesetzt werden. Die Wiegevorrichtung kann neben der Haltevorrichtung eine Waage, insbesondere eine Plattformwaage, aufweisen.

Die Wiegevorrichtung kann vorteilhaft eine Wiegeplattform mit einer Auflagefläche für ein zu wiegendes Gut aufweisen. Die Wiegeplattform kann in einer Projektion senkrecht zu der Auflagefläche seitlich über die Haltevorrichtung und/oder das Festlegemittel stehen. Alternativ oder zusätzlich kann die Wiegeplattform einen Spalt zwischen einem Gehäuse der Waage und einer Tischplatte abdecken. Durch eine derart ausgebildete Wiegevorrichtung wird eine optisch ansprechende Wiegevorrichtung bereitgestellt, bei der keine den ästhetischen Eindruck störenden Spalte zu sehen sind. Insbesondere ist jedoch wirkungsvoll vermieden, dass versehentlich Schmutz oder Teile des Wiegegutes in den Spalt gelangen.

Die Hubvorrichtung ist vorzugsweise wahlweise entweder in eine Hebeposition oder eine Absenkposition überführbar ausgebildet. Die Hebeposition kann beispielsweise eine Position sein, bei der sich die Unterseite der Wiegeplättform 6mm über der Tischplatte befindet.

Bei einer ganz besonders vorteilhaften Ausführung ist vorgesehen, dass die Waage in der Absenkposition automatisch abgeschaltet ist. Das Abschalten der Waage kann alternativ oder zusätzlich durch eine Schaltvorrichtung erfolgen, wenn die Waage von der Hubvorrichtung in die Absenkposition überführt wird oder wenn die Hubvorrichtung die Absenkposition erreicht hat.

In vorteilhafter Weise kann alternativ oder zusätzlich auch vorgesehen sein, dass die Waage in der Hebeposition automatisch eingeschaltet ist. Beispielsweise kann das Einschalten der Waage durch eine Schaltvorrichtung erfolgen, wenn die Waage von der Hubvorrichtung in die Hebeposition überführt wird oder wenn die Hubvorrichtung die Hebeposition erreicht.

Durch das automatische An- und Abschalten der Waage in Abhängigkeit von der Stellung der Hubvorrichtung ist wirkungsvoll eine Fehlbedienung vermieden. Insbesondere ist vermieden, dass der Benutzer die Waage benutzt, wenn sich die Hubvorrichtung in der Absenkposition befindet und die Gefahr besteht, dass es - beispielsweise durch einen Kontakt der Wiegefläche zu der Tischplatte - zu Falschwiegungen kommt.

Durch das automatische Abschalten der Waage ist außerdem ein unnötiger Betrieb der Waage und damit eine Energieverschwendung vermieden, wenn sich die Waage in der Absenkposition befindet.

Das Festlegemlttel und die Waage können derart dimensioniert sein, dass in einer Absenkposition die Wiegeplattform an der Tischplatte, an der die die Waage tragende Haltevorrichtung festgelegt ist, aufliegt. In dieser Position sind die Wiegemechanik und die Wägezellen wirkungsvoll vor Oberlastung geschützt, weil die Tischplatte als Anschlag fungiert, der ein übermäßiges Verschieben der Wiegeplattform verhindert. Das Aufliegen der Wiegeplattform auf der Tischplatte in der Absenkposition bietet außerdem den Vorteil, dass kein Schmutz in die Öffnung der Tischplatte und/oder in die gehaltene Waage eindringen kann. Insbesondere kann zwischen Wiegeplattform und der Tischplatte eine Dichtung angeordnet sein. Diese kann vorteilhaft flüssigkeitsdicht ausgebildet sein, so dass in der Absenkposition auch keinen flüssigen Stoffe in die Öffnung der Tischplatte und/oder in die gehaltene Waage eindringen können.

Vorzugsweise ist die Wiegeplattform in der Hebeposition von der Tischplatte, an der die die Waage tragende Haltevorrichtung festgelegt ist, beabstandet. Dies vorzugsweise derart, dass ein Kraftnebenschluss durch einen Kontakt der Wiegeplattform während eines Wiegevorganges sicher ausgeschlossen ist.

Eine vorteilhafte Ausführung der Wiegevorrichtung weist eine Volumenmesseinrichtung zum Messen des Volumens eines zu wiegenden Gutes auf Die Volumenmesseinrichtung kann beispielsweise derart ausgebildet sein, dass sie das Volumen des zu wiegenden Gutes optisch erfasst. Insbesondere kann vorgesehen sein, dass zumindest eine Videokamera aufweist, wobei die Bilddaten der Videokamera beispielsweise von einem Computersystem ausgewertet werde.

Es kann auch vorgesehen sein, dass die Volumenmesseinrichtung zumindest eine Längenmesseinrichtung, insbesondere eine Laserlängenmesseinrichtung oder eine Ultraschalllängenmesseinrichtung, aufweist. Aus den ermittelten Längen kann dann - beispielsweise mittels einer Auswertevorrichtung - das Volumen des zu wiegenden Gutes errechnet werden.

Die Längenmessvorrichtung kann vorteilhaft auch ein oder mehrere Lineale aufweisen. Die Lineale sind bei einer vorteilhaften Ausführung derart gelagert und angeordnet, dass sie beim Überführen der Haltevorrichtung in die Hebeposition automatisch ausklappen oder ausfahren.

Es kann außerdem vorgesehen sein, dass das Lineal bzw. die Lineale, die hierzu beispielsweise mit einem Barcode versehen sein können, optisch abgetastet werden. Dies beispielsweise in der Art, dass das zu wiegende Gut vor das Lineal bzw. die Lineale gestellt wird und optisch erfasst wird, welcher Bereich des Lineals bzw. der Lineale frei geblieben ist und/oder welcher Bereich verdeckt ist

Die zuvor genannten Haltevorrichtungen und Wiegevorrichtungen können vorteilhaft in einem Arbeitsplatz mit einer Tischplatte, die eine Öffnung aufweist, eingesetzt werden. Insbesondere kann die Waage mittels einer erfindungsgemäßen Haltevorrichtung in der Öffnung der Tischplatte gehalten sein.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind.

Dabei zeigen:
- Figur 1:: eine perspektivische Darstellung einer Tischplatte mit der erfindungsgemäßen Wiegevorrichtung,
- Figur 2:: eine Vorderansicht auf die Tischplatte mit der erfindungsgemäßen Wiegevorrichtung,
- Figur 3:: eine Seitenschnittansicht entlang der Linie A-A aus Figur 2 von der erfindungsgemäßen Wiegevorrichtung bei der die Wiegeplattform angehoben ist.
- Figur 4:: eine Seitenschnittansicht entlang der Linie A-A aus Figur 2 von der erfindungsgemäßen Wiegevorrichtung, bei der die Wiegeplattform abgesenkt ist., und
- Figur 5:: eine Seitenschnittansicht einer erfindungsgemäßen Wiegevorrichtung mit einer Hubvorrichtung, die Exzenter aufweist.
- Fig. 6.: eine Seitenschnittansicht einer erfindungsgemäßen Wiegevorrichtung mit einer hydraulisch angetriebenen Hubvorrichtung 1.

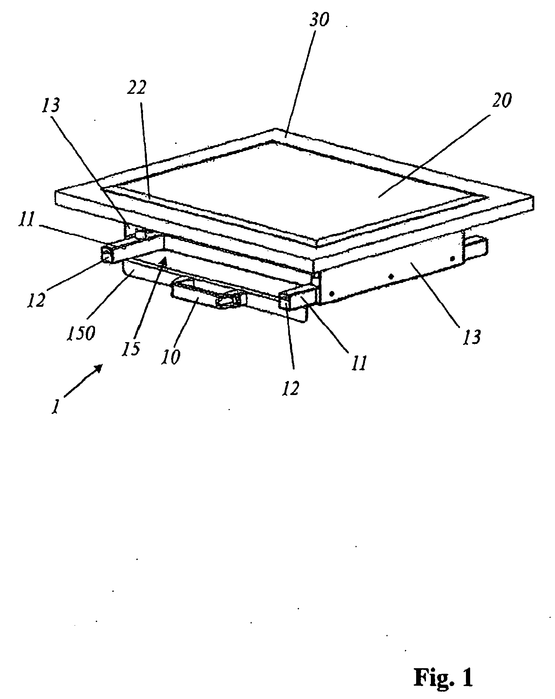

Der in Figur 1 gezeigte Arbeitsplatz weist eine rechteckförmige Tischplatte 30 auf, die der besseren Übersichtlichkeit halber im Verhältnis zur Waage sehr klein ist. Tatsächlich ist bei den meisten Anwendungen die Tischplatte zumeist wesentlich größer als hier dargestellt.

Auf der Tischplatte 30 liegt eine rechteckförmige Wiegeplattform 20 einer In den Figuren nicht gezeigten Waage. Die Wiegeplattform 20 weist an den Enden eine Abfasung 22 auf. Ferner weist der Arbeitsplatz eine Haltevorrichtung 1 auf.

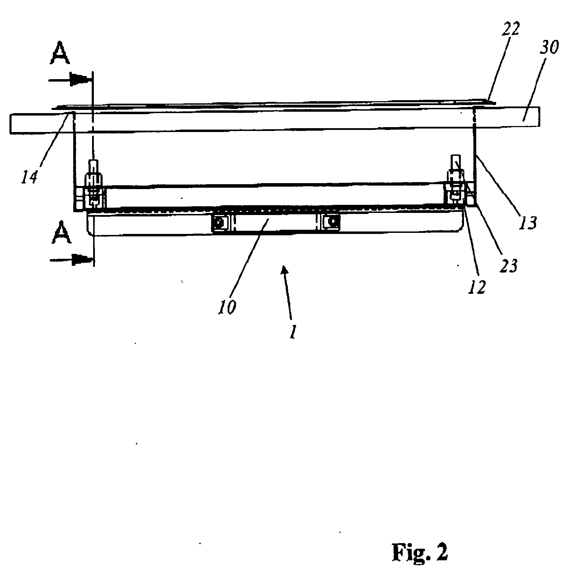

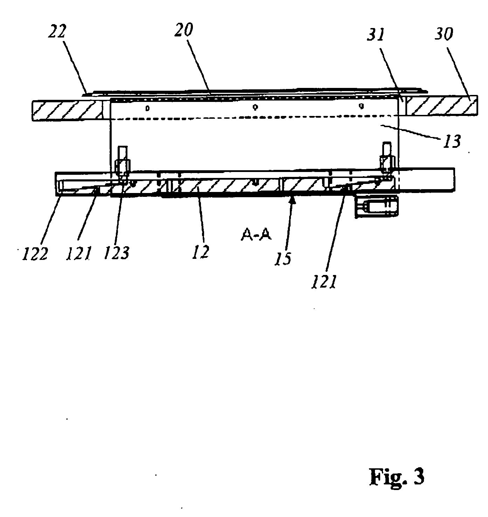

Die Haltevorrichtung 1 weist zwei Schenkel 13 auf, die sich im Wesentlichen senkrecht von der Tischplatte erstrecken und an sich gegenüberliegenden Enden der in Figur 3 gezeigten Öffnung 31 der Tischplatte 30 vorgesehen sind. Die Haken 13 sind ihrem einen Ende jeweils mit einer Schiene 11 verbunden ist. An seinem der Schiene 11 entfernten Ende ist der Haken 13 mit einem in Figur 2 gezeigten Schenkel 14 verbunden. Dabei bilden der Schenkel 13 und der Haken 14 die wesentlichen Teile des Festlegemittels

Die beiden Schienen 11 verlaufen parallel zueinander und weisen einen Hohlraum auf, in dem jeweils eine verfahrbare Hubschiene 12 vorgesehen ist. Die belden Hubschienen 12 sind mit einem Bedienelement 10 in Form eines Griffs verbunden. Genauer gesagt Ist das Bedienelement 10 über ein Verbindungsmittel 15 mit den beiden Hubschlenen 12 verbunden. Das Verbindungsmittel 15 Weist einen plattenförmigen Grundkörper und einen Knickabschnitt 150 auf. Der Knickabschnitt 150 ist an einem Ende des plattenförmigen Grundkörpers ausgebildet und erstreckt sich im Wesentlichen senkrecht zu dem Grundkörper. Der Grundkörper verläuft parallel zu der Wiegeplattform 20. Das Bedienelement 10 Ist an dem Knickabschnltt 150 vorgesehen.

In Figur 2 wird eine Vorderansicht auf die Tischplatte 30 und die Haltevorrichtung 1 gezeigt. Der Schenkel 14 ist mit dem Haken 13 verbunden und derart umgelenkt, dass er auf der Tischplatte 30 aufliegt und damit eine hängende Befestigung der Haltevorrichtung 1 an der Tischplatte 30 ermöglicht. Die in den Figuren nicht gezeigte Waage und damit die Wiegeplattform 20 ist über ein Koppelmittel 23 mit der Hubschiene 12 gekoppelt. Genauer gesagt ist die Waage über vier Koppelmittel 23, die an den Ecken der Waage vorgesehen sind, mit der Hubschiene 12 gekoppelt.

Wie aus Figur 3 ersichtlich ist, weist die Hubschiene 12 an ihren Enden jeweils eine Anlaufschräge 121 auf. Die beiden Anlaufschrägen 121 einer Hubschlene 12 besitzen einen unteren Abschnitt 122 und einen oberen Abschnitt 123, die an den sich gegenüberliegenden Enden der Anlaufschräge 121 vorgesehen sind. Der untere und obere Abschnitt 122, 123 sind parallel zu der Wiegeplattform ausgebildet. Zwischen dem unteren und dem oberen Abschnitt 122, 123 einer Anlaufschräge 121 ist jeweils ein im Wesentlichen linear ansteigender Abschnitt vorgesehen. Dabei erfolgt der lineare Anstieg bei allen Anlaufschrägen 121 der Hubschienen 12 in die gleiche Richtung. Die Koppelmittel 23 der nicht dargestellten Waage stehen mit der jeweiligen Anlaufschräge 121 in Kontakt. Genauer gesagt befinden sich die Koppelmittel 23 bei der in Figur 3 gezeigten Position in dem oberen Abschnitt der Anlaufschräge 121, so dass sich die Wiegeplattform 20 in einer Hebeposition befindet.

In der Hebeposition liegt die Wiegeplattform 20 nicht an der Tischplatte 30. Die Wiegeplattform 20 erstreckt sich derart, dass die Abfasung 22 der Wiegeplattform 20 die Öffnung 31 der Tischplatte 30 abdeckt.

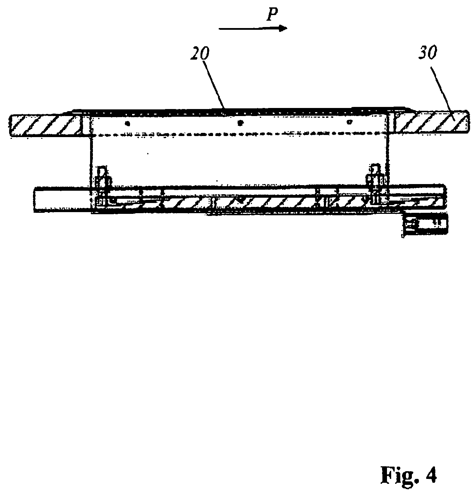

In Figur 4 wird eine Absenkposition der Wiegeplattform 20 gezeigt. In der Absenkposition der Wiegeplattform 20 befinden sich die Koppelmittel 23 in dem unteren Abschnitt 122 der Anlaufschräge 121. Die Wiegeplattform 20 liegt an der Tisch platte 30.

Im Folgenden wird der Hebevorgang der Wiegeplattform aus der in Figur 4 gezeigten Absenkposition beschrieben.

Zum Verschieben der Wiegeplattform aus der abgesenkten Position verschiebt der Benutzer das Bedienelement 10 mit dem Verbindungsmittel 15 entlang der in Figur 3 gezeigten Pfeilrichtung P. Aufgrund der Kopplung des Verbindungsmittels 15 mit den beiden Hubschienen 12 verschieben sich diese innerhalb der Schiene 11 in die gleiche Richtung wie das Verbindungsmittel 15. Während des Verschiebens der Hubschiene 12 kommt das Koppelmittel 23 mit dem linear ansteigenden Abschnitt der Anlaufschräge 121 in Kontakt, wodurch auf das Koppelmittel eine in vertikaler Richtung gerichtete Kraft wirkt. Da das Koppelmittel 23 mit der Waage und damit der Wiegeplattform 20 gekoppelt ist, wirkt die Kraft ebenfalls auf die Waage und die Wiegeplattform 20 und bewirkt einen vertikalen Anstieg der Wiegeplattform 20. Die Wiegeplattform 20 befindet sich dabei in der Hebeposition, wenn sich das Koppelmittel in dem oberen Abschnitt der Anlaufschräge 121 befindet.

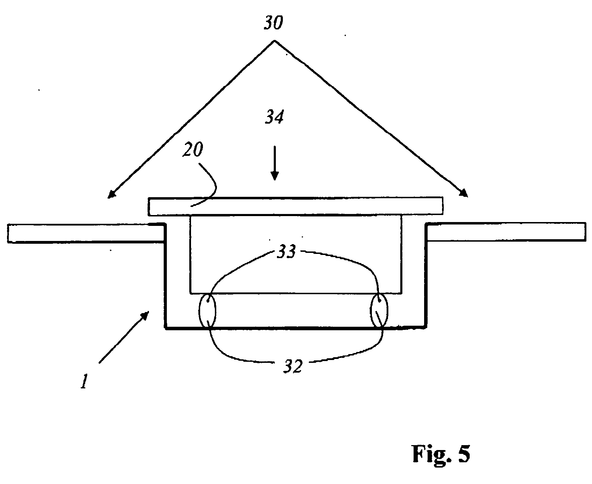

Figur 5 zeigt eine Seitenschnittansicht einer erfindungsgemäßen Wiegevorrichtung mit einer Hubvorrichtung 1, die mehrere Exzenter 32 aufweist. Die Exzenter 32 sind motorisch angetrieben um Drehachsen 33 drehbar angeordnet. Je nach Drehstellung der Exzenter 32 befindet sich die Waage 34 in der (dargestellten) Hebeposition oder einer (nicht dargestellten) Absenkposition bzw. auf dem Weg von der einen Position in die andere. In der Absenkposition liegt die Wiegeplattform 20 auf der Oberseite der Tischplatte 30 auf.

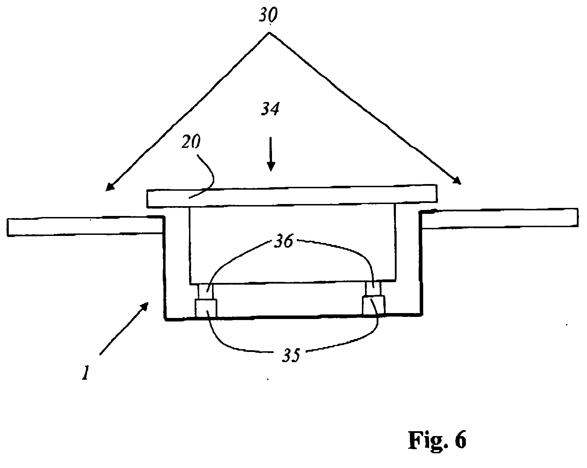

Figur 6 zeigt eine Seitenschnittansicht einer erfindungsgemäßen Wiegevorrichtung mit einer hydraulisch angetriebenen Hubvorrichtung 1, die mehrere Hubzylinder 35 mit jeweils einem Hubkolben 36 aufweist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Haltevorrichtung
- 10: Bedienelement
- 11: Schiene
- 12: Hubschiene
- 13: Haken
- 14: Schenkel
- 15: Verbindungsmittel
- 20: Wiegeplattform
- 22: Abfasung
- 23: Koppelmittel
- 30: Tischplatte
- 31: Öffnung
- 32: Exzenter
- 33: Drehachse
- 34: Waage
- 35: Hubzylinder
- 36: Hubkolben
- 121: Anlaufschräge
- 122: untere Abschnitt
- 123: obere Abschnitt
- 150: Knickabschnitt
- P: Pfeil

## Patentansprüche

1. Haltevorrichtung (1) zum Halten einer Waage in einer Öffnung (31) einer Tischplatte (30), wobei die Haltevorrichtung zumindest ein Festlegemittel zum - vorzugsweise wieder lösbaren - Festlegen der Haltevorrichtung (1) an der Tischplatte (30) aufweist.

2. Haltevorrichtung (1) nach Anspruch 1, **dadurch gekennzeichnet, dass** die Haltevorrichtung (1) dazu ausgebildet ist hängend an einer Tischplatte (30) befestigt zu werden.

3. Haltevorrichtung (1) nach einem der Ansprüche 1 oder 2, **dadurch gekennzeichnet, dass** das Festlegemittel zumindest einen Haken (14) zum Anhängen der Haltevorrichtung (1) an eine Tischplatte (30) aufweist und/oder dass das Festlegemittel zumindest einen Haken (14) mit zumindest einem Schenkel (13) aufweist, der dazu bestimmt ist, in der Festlegeposition auf der Oberseite einer Tischplatte (30) aufzuliegen.

4. Haltevorrichtung (1) nach einem der Ansprüche 1 bis 3, **dadurch gekennzeichnet, dass** die Haltevorrichtung (1) eine Hubvorrichtung zum Anheben einer gehaltenen Waage aufweist und/oder dass die Haltevorrichtung (1) eine Hubvorrichtung zum Anheben einer gehaltenen Waage relativ zu einer Tischplatte (30) aufweist.

5. Haltevorrichtung (1) nach Anspruch 4, **dadurch gekennzeichnet, dass** die Hubvorrichtung ein Bedienelement (10) aufweist, das parallel zu einer Aufnahmefläche für die Waage verschiebbar ist und/oder dass die Hubvorrichtung ein Bedienelement (10) aufweist, das parallel zu einer Tischplatte (30), an der die Haltevorrichtung (1) festgelegt ist, verschiebbar ist und/oder dass die Hubvorrichtung ein Bedienelement (10) aufweist, das senkrecht zur Hubrichtung verschiebbar ist.

6. Haltevorrichtung (1) nach einem der Ansprüche 4 oder 5, **dadurch gekennzeichnet, dass** die Hubvorrichtung ein Bedienelement (10) aufweist, das zum Anheben einer gehaltenen Waage wie eine Schublade ausziehbar ist und das zum Absenken einer gehaltenen Waage wie eine Schublade einschiebbar ist.

7. Haltevorrichtung (1) nach einem der Ansprüche 4 bis 6, **dadurch gekennzeichnet, dass**
a. die Hubvorrichtung zumindest eine Anlaufschräge (121) aufweist, die zum Bewirken eines Hubvorganges relativ zu einer Aufnahme für eine Waage verschiebbar ist und/oder dass
b. die Hubvorrichtung eine Parallelogrammführung aufweist und/oder dass
c. die Hubvorrichtung eine Scherenhubvorrichtung aufweist und/oder dass
d. die Hubvorrichtung zumindest einen Exzenter aufweist und/oder dass
e. die Hubvorrichtung zumindest einen Hubzylinder mit einem Hubkolben aufweist und/oder dass
f. die Hubvorrichtung manuell antreibbar ist und/oder dass
g. die Hubvorrichtung einen motorischen Antrieb aufweist und/oder dass
h. die Hubvorrichtung einen pneumatischen Antrieb aufweist und/oder dass
i. die Hubvorrichtung einen hydraulischen Antrieb aufweist und/oder dass
j. die Hubvorrichtung einen elektrischen Antrieb aufweist und/oder dass
k. die Hubvorrichtung zumindest einen Hubmagneten aufweist.

8. Haltevorrichtung (1) nach einem der Ansprüche 1 bis 7, **dadurch gekennzeichnet, dass** die Haltevorrichtung (1) zur Verwendung mit unterschiedlich großen Tischplattenöffnungen (31) und/oder mit unterschiedlich großen Waagen verstellbar ausgebildet ist.

9. Wiegevorrichtung, die eine Waage, insbesondere einer Plattformwaage, und eine Haltevorrichtung (1) nach einem der Ansprüche 1 bis 8 aufweist.

10. Wiegevorrichtung nach Anspruch 9, **dadurch gekennzeichnet, dass** die Waage eine Wiegeplattform mit einer Auflagefläche für ein zu wiegendes Gut aufweist, wobei
a. die Wiegeplattform in einer Projektion senkrecht zu Auflagefläche seitlich über die Haltevorrichtung (1) und/oder das Festlegemittel übersteht und/oder wobei
b. die Wiegeplattform dazu ausgebildet ist, einen Spalt zwischen einem Gehäuse der Waage und einer Tischplatte (30) abzudecken.

11. Wiegevorrichtung nach einem der Ansprüche 9 oder 10, **dadurch gekennzeichnet, dass**
a. die Hubvorrichtung wahlweise entweder In eine Hebeposition oder eine Absenkposition überführbar ist und/oder dass
b. die Hubvorrichtung wahlweise entweder in eine Hebeposition oder eine Absenkposition überführbar ist, wobei die Waage in der Absenkposition automatisch abgeschaltet ist und/oder wobei eine Schaltvorrichtung vorgesehen ist, die die Waage beim überführen der Hubvorrichtung in die Absenkposition oder bei Erreichen der Absenkposition abschaltet und/oder dass
c. die Hubvorrichtung wahlweise entweder in eine Hebeposition oder eine Absenkposition überführbar ist, wobei die Waage in der Hebeposition automatisch eingeschaltet ist und/oder wobei eine Schaltvorrichtung vorgesehen ist, die die Waage beim Überführen der Hubvorrichtung in die Hebeposition oder bei Erreichen der Hebeposition einschaltet.

12. Wegevorrichtung nach einem der Ansprüche 9 bis 11, **dadurch gekennzeichnet, dass** das Festlegemittel und die Waage derart dimensioniert sind, dass
a. eine Wiegeplattform der Waage in der Absenkposition auf einer Tischplatte (30), an der die die Waage tragende Haltevorrichtung (1) festgelegt ist, aufliegt und/oder dass
b. eine Wiegeplattform der Waage in der Hebeposition von einer Tischplatte (30), an der die die Waage tragende Haltevorrichtung (1) festgelegt ist, beabstandet ist.

13. Wiegevorrichtung nach einem der Ansprüche 9 bis 12, **dadurch gekennzeichnet, dass**
a. eine Volumenmesseinrichtung zum Messen des Volumens eines zu wiegenden Gutes vorgesehen ist oder dass
b. eine Volumenmesseinrichtung zum Messen des Volumens eines zu wiegenden Gutes vorgesehen ist, wobei die Volumenmesseinrichtung optisch arbeitet und/oder wobei die Volumenmesseinrichtung optisch arbeitet und zumindest eine Videokamera aufweist oder dass
c. eine Volumenmesseinrichtung zum Messen des Volumens eines zu wiegenden Gutes vorgesehen ist, wobei die Volumenmesseinrichtung zumindest eine Längenmesseinrichtung, insbesondere eine Laserlängenmesseinrichtung oder eine Ultraschalllängenmesseinrichtung, aufweist.

14. Arbeitsplatz mit einer Tischplatte, die eine Öffnung (31) aufweist, wobei in der Öffnung (31) eine Waage mittels einer Haltevorrichtung (1) nach einem der Ansprüche 1 bis 8 gehalten ist und/oder Arbeitsplatz mit einer Tischplatte (30) und einer Wiegevorrichtung nach einem der Ansprüche 9 bis 13.

15. Arbeitsplatz nach Anspruch 14, **dadurch gekennzeichnet, dass** die Waage mit einer Hubvorrichtung wahlweise entweder in eine Hebeposition, in der vorzugsweise eine Wiegeplattform der Waage von der Tischplatte beabstandet ist, oder eine Absenkposition, in der vorzugsweise eine Wiegeplattform der Waage auf der Tischplatte aufliegt, überführbar ist.

## Claims

1. Holding device (1) for holding a scale in an opening (31) in a work surface (30), wherein the holding device has at least one fixing means for fixing the holding device (1) - preferably redetachably - to the work surface (30).

2. Holding device (1) according to Claim 1, **characterized in that** the holding device (1) is designed to be fixed to a work surface (30) in a suspended manner.

3. Holding device (1) according to either of Claims 1 and 2, **characterized in that** the fixing means has at least one hook (14) for suspending the holding device (1) on a work surface (30), and/or **in that** the fixing means has at least one hook (14) with at least one leg (13) which is intended to lie on the upper side of a work surface (30) when in a fixed position.

4. Holding device (1) according to one of Claims 1 to 3, **characterized in that** the holding device (1) has a lifting device for raising a held scale, and/or **in that** the holding device (1) has a lifting device for raising a held scale relative to a work surface (30).

5. Holding device (1) according to Claim 4, **characterized in that** the lifting device has an operating element (10) which can be displaced parallel to a receiving surface for the scale, and/or **in that** the lifting device has an operating element (10) which can be displaced parallel to a work surface (30) to which the holding device (1) is fixed, and/or that the lifting device has an operating element (10) which can be displaced at right angles to the lifting direction.

6. Holding device (1) according to either of Claims 4 and 5, **characterized in that** the lifting device has an operating element (10) which can be pulled out like a drawer in order to raise a held scale and which can be pushed in like a drawer in order to lower a held scale.

7. Holding device (1) according to one of Claims 4 to 6, **characterized in that**
a. the lifting device has at least one run-on incline (121), which can be displaced in order to effect a lifting operation relative to a holder for a scale, and/or **in that**
b. the lifting device has a parallelogram guide, and/or **in that**
c. the lifting device has a scissors-type lifting device, and/or **in that**
d. the lifting device has at least one eccentric, and/or **in that**
e. the lifting device has at least one lifting cylinder with a lifting piston, and/or **in that**
f. the lifting device can be driven manually, and/or **in that**
g. the lifting device has a motor drive, and/or **in that**
h. the lifting device has a pneumatic drive, and/or **in that**
i. the lifting device has a hydraulic drive, and/or **in that**
j. the lifting device has an electric drive, and/or **in that**
k. the lifting device has at least one lifting magnet.

8. Holding device (1) according to one of Claims 1 to 7, **characterized in that** the holding device (1) is designed to be adjustable for use with work surface openings (31) of different sizes and/or with scales of different sizes.

9. Weighing device which has a scale, in particular a platform scale, and a holding device (1) according to one of Claims 1 to 8.

10. Weighing device according to Claim 9, **characterized in that** the scale has a weighing platform with a supporting surface for goods to be weighed, wherein
a. the weighing platform projects laterally beyond the holding device (1) and/or the fixing means in a projection at right angles to the supporting surface, and/or wherein
b. the weighing platform is designed to cover the gap between a housing of the scale and a work surface (30).

11. Weighing device according to either of Claims 9 and 10,
**characterized in that**
a. the lifting device can optionally be moved either into a raised position or a lowered position, and/or **in that**
b. the lifting device can optionally be moved either into a raised position or a lowered position, wherein the scale is automatically switched off when in the lowered position and/or wherein a switching device is provided which switches the scale off as the lifting device is moved into the lowered position or when the lowered position is reached, and/or **in that**
c. the lifting device can optionally be moved either into a raised position or a lowered position, wherein the scale is automatically switched on in the raised position, and/or wherein a switching device is provided, which switches the scale on as the lifting device is moved into the raised position or when the raised position is reached.

12. Weighing device according to one of Claims 9 to 11, **characterized in that** the fixing means and the scale are dimensioned such that
a. when in the lowered position, a weighing platform of the scale rests on a work surface (30) to which the holding device (1) carrying the scale is fixed, and/or **in that**
b. when in the raised position, a weighing platform of the scale is spaced apart from a work surface (30) to which the holding device (1) carrying the scale is fixed.

13. Weighing device according to one of Claims 9 to 12, **characterized in that**
a. a volume measuring device for measuring the volume of goods to be weighed is provided, or in that
b. a volume measuring device for measuring the volume of goods to be weighed is provided, wherein the volume measuring device operates optically, and/or wherein the volume measuring device operates optically and has at least one video camera, or **in that**
c. a volume measuring device for measuring the volume of goods to be weighed is provided, wherein the volume measuring device has at least one length measuring device, in particular a laser length measuring device or an ultrasonic length measuring device.

14. Workstation having a work surface which has an opening (31), wherein a scale is held in the opening (31) by means of a holding device (1) according to one of Claims 1 to 8, and/or a workstation having a work surface (30) and a weighing device according to one of Claims 9 to 13.

15. Workstation according to Claim 14, **characterized in that** the scale can optionally be moved by a lifting device either into a raised position, in which a weighing platform of the scale is preferably spaced apart from the work surface, or a lowered position, in which a weighing platform of the scale preferably rests on the work surface.

## Revendications

1. Dispositif de maintien (1) pour maintenir une balance dans une ouverture (31) d'un plateau de table (30), le dispositif de maintien comportant au moins un moyen de fixation servant à fixer - de préférence de façon à nouveau amovible - le dispositif de maintien (1) au niveau du plateau de table (30).

2. Dispositif de maintien (1) selon la revendication 1, **caractérisé en ce que** le dispositif de maintien (1) est réalisé pour être fixé par accrochage au plateau de table (30).

3. Dispositif de maintien (1) selon l'une quelconque des revendications 1 ou 2, **caractérisé en ce que** le moyen de fixation comporte au moins un crochet (14) servant à accrocher le dispositif de maintien (1) à un plateau de table (30) et/ou que le moyen de fixation comporte au moins un crochet (14) avec au moins un côté (13) déterminé pour reposer sur le côté supérieur d'un plateau de table (30) dans la position de fixation.

4. Dispositif de maintien (1) selon l'une quelconque des revendications 1 à 3, **caractérisé en ce que** le dispositif de maintien (1) comporte un dispositif de levée servant à soulever une balance maintenue et/ou que le dispositif de maintien (1) comporte un dispositif de levée en vue de soulever une balance maintenue par rapport à un plateau de table (30).

5. Dispositif de maintien (1) selon la revendication 4, **caractérisé en ce que** le dispositif de levée comporte un élément de commande (10) pouvant être déplacé parallèlement à une surface de logement pour la balance et/ou que le dispositif de levée comporte un élément de commande (10) pouvant être déplacé parallèlement à un plateau de table (30) au niveau duquel le dispositif de maintien (1) est fixé et/ou que le dispositif de levée comporte un élément de commande (10) pouvant être déplacé perpendiculairement à la direction de levée.

6. Dispositif de maintien (1) selon l'une quelconque des revendications 4 ou 5, **caractérisé en ce que** le dispositif de levée comporte un élément de commande (10) pouvant être sorti par traction à la façon d'une charge de poussée pour soulever une balance maintenue et pouvant être rentré à la façon d'une charge de poussée pour faire descendre une balance maintenue.

7. Dispositif de maintien (1) selon l'une quelconque des revendications 4 à 6, **caractérisé en ce que** :
a. le dispositif de levée comporte au moins un biais d'élancement (121) pouvant être déplacé pour provoquer un processus de levée par rapport à un logement pour une balance ; et/ou que
b. le dispositif de levée comporte un guide en forme de parallélogramme ; et/ou que
c. le dispositif de levée comporte un dispositif de levée par cisaillement ; et/ou que
d. le dispositif de levée comporte au moins un excentre ; et/ou que
e. le dispositif de levée comporte au moins un vérin de levée avec un piston de levée ; et/ou que
f. le dispositif de levée est entraîné manuellement ; et/ou que
g. le dispositif de levée comporte un entraînement motorisé ; et/ou que
h. le dispositif de levée comporte un entraînement hydraulique et/ou pneumatique ; et/ou que
i. le dispositif de levée comporte un entraînement hydraulique ; et/ou que
j. le dispositif de levée comporte un entraînement électrique ; et/ou que
k. le dispositif de levée comporte au moins un aimant de levage.

8. Dispositif de maintien (1) selon l'une quelconque des revendications 1 à 7, **caractérisé en ce que** le dispositif de maintien (1) est réalisé de façon à pouvoir être réglé pour être utilisé avec des ouvertures de plateau de table (31) de différentes tailles et/ou avec des balances de différentes tailles.

9. Dispositif de balance comportant une balance, notamment une balance à plateau et un dispositif de maintien (1) selon l'une quelconque des revendications 1 à 8.

10. Dispositif de balance selon la revendication 9, **caractérisé en ce que** la balance comporte un plateau de pesée avec une surface portante pour un produit à peser ;
a. le plateau de pesée saillant dans une projection, perpendiculairement à la surface portante, en côté au-dessus du dispositif de maintien (1) et/ou du moyen de fixation ; et/ou
b. le plateau de pesée étant réalisé pour recouvrir une fente entre un boîtier de la balance et un plateau de table (30).

11. Dispositif de balance selon l'une quelconque des revendications 9 ou 10, **caractérisé en ce que** :
a. le dispositif de levée peut être amené au choix soit dans la position levée soit dans une position abaissée ; et/ou que
b. le dispositif de levée peut être amené au choix soit dans une position levée soit dans une position abaissée, la balance étant automatiquement déconnectée dans la position abaissée et/ou un dispositif de connexion étant prévu déconnectant la balance lors du transfert du dispositif de levée dans la position abaissée ou lorsque la position abaissée est atteinte ; et/ou que
c. le dispositif de levée peut être amené au choix soit dans une position levée soit dans une position abaissée, la balance étant automatiquement connectée dans la position levée et/ou un dispositif de connexion étant prévu qui connecte la balance lors du transfert du dispositif de levée dans la position levée ou lorsque la position levée est atteinte.

12. Dispositif de balance selon l'une quelconque des revendications 9 à 11, **caractérisé en ce que** le moyen de fixation et la balance sont dimensionnés de telle sorte que :
a. un plateau de pesée de la balance repose, dans la position abaissée, sur un plateau de table (30) au niveau duquel le dispositif de maintien (1) supportant la balance est fixé ; et/ou que
b. un plateau de pesée de la balance se place à une certaine distance, dans la position levée, d'un plateau de table (30) au niveau duquel le dispositif de maintien (1) supportant la balance est fixé.

13. Dispositif de balance selon l'une quelconque des revendications 9 à 12, **caractérisé en ce que** :
a. un dispositif de mesure de volume est prévu pour mesurer le volume d'un produit à peser ; ou que
b. un dispositif de mesure de volume est prévu pour mesurer le volume d'un produit à peser, le dispositif de mesure de volume travaillant optiquement et/ou le dispositif de mesure de volume travaillant optiquement et comportant au moins une caméra vidéo ; ou que
c. un dispositif de mesure de volume est prévu pour mesurer le volume d'un produit à peser, le dispositif de mesure de volume comportant au moins un dispositif de mesure de longueur, notamment un dispositif de mesure de longueur par laser ou un dispositif de mesure de longueur par ultrason.

14. Poste de travail équipé d'un plateau de table comportant une ouverture (31), une balance étant maintenue dans l'ouverture (31) au moyen d'un dispositif de maintien (1) selon l'une quelconque des revendications 1 à 8 et/ou poste de travail équipé d'un plateau de table (30) et d'un dispositif de balance selon l'une quelconque des revendications 9 à 13.

15. Poste de travail selon la revendication 14, **caractérisé en ce que** la balance est équipée d'un dispositif de levée pouvant être amené au choix soit dans une position levée dans laquelle de préférence un plateau de pesée de la balance est placé à une certaine distance du plateau de table soit dans une position abaissée dans laquelle de préférence un plateau de pesée de la balance repose sur le plateau de table.
